# EUROPÄISCHE PATENTSCHRIFT

(11) **EP 0 778 294 B1**
(45) Veröffentlichungstag und Bekanntmachung des Hinweises auf die Patenterteilung: **28.04.1999**
(21) Anmeldenummer: 96118971.9
(22) Anmeldetag: 27.11.1996
(51) Int. Cl.: C08F 210/06, C08F 297/08, C08F 2/00

(54) **Verbesserte Propylenpolymerisate**
Improved propylene polymers
Polymères de propylène améliorés

(30) Priorität: 06.12.1995 DE 19545498
(43) Veröffentlichungstag der Anmeldung: 11.06.1997
(73) Patentinhaber: BASF AKTIENGESELLSCHAFT, 67056 Ludwigshafen (DE)
(72) Erfinder: Hüffer, Stephan, Dr., 67071 Ludwigshafen (DE); Kersting, Meinolf, Dr., 67435 Neustadt (DE); Langhauser, Franz, Dr., 67098 Bad Dürkheim (DE); Werner, Rainer Alexander, Dr., 67098 Bad Dürkheim (DE); Seelert, Stefan, Dr., 67227 Frankenthal (DE); Müller, Patrik, Dr., 67661 Kaiserslautern (DE); Kerth, Jürgen, Dr., 67316 Carlsberg (DE)

(56) Entgegenhaltungen:
- EP-A- 0 438 068
- EP-A- 0 680 980
- EP-A- 0 702 038
- WO-A-96/05236

## Beschreibung

Die vorliegende Erfindung betrifft Propylenpolymerisate mit einem Schmelzflußinex, gemessen nach DIN 53 735 bei 23°C unter einem Gewicht von 2,16 kg, im Bereich von 0,1 bis 100 g/10 min aus 25 bis 97 Gew.-% eines Propylenpolymerisats (I), das 0 bis 15 Gew.-% einpolymerisierte C₂-C₁₀-Alk-1-ene enthält und aus 3 bis 75 Gew.-% eines weiteren Propylenpolymerisats (II), das 15 bis 80 Gew.-% einpolymerisierte C₂-C₁₀-Alk-1-ene aufweist,
erhältlich durch zweistufige Polymerisation von Propylen und C₂-C₁₀-Alk-1-enen in Gegenwart eines Ziegler-Natta-Katalysatorsystems aus
a) einer titanhaltigen Feststoffkomponente, die eine Verbindung des Magnesiums, ein Halogen, Kieselgel als Träger und einen Carbonsäureester als Elektronendonorverbindung aufweist,
sowie als Cokatalysatoren
b) eine Aluminiumverbindung und
c) eine weitere Elektronendonorverbindung enthält,
wobei man in einer ersten Polymerisationsstufe bei Temperaturen im Bereich von 50 bis 100°C, Drücken im Bereich von 15 bis 40 bar und einer mittleren Verweilzeit von 0,5 bis 5 Stunden Propylen gegebenenfalls in Anwesenheit von weiteren C₂-C₁₀-Alk-1-enen polymerisiert
und anschließend in einer zweiten Polymerisationsstufe dem aus der ersten Polymerisationsstufe erhaltenen Propylenpolymerisat bei Temperaturen im Bereich von 30 bis 100°C, Drücken im Bereich von 15 bis 40 bar und mittleren Verweilzeiten von 0,5 bis 5 Stunden ein Gemisch aus Propylen und weiteren C₂-C₁₀-Alk-1-enen so hinzupolymerisiert, daß das Gewichtsverhältnis zwischen den in der ersten und den in der zweiten Polymerisationsstufe umgesetzten Monomeren im Bereich von 0,5:1 bis 20:1 liegt,
dadurch gekennzeichnet, daß man in beiden Polymerisationsstufen ein Kieselgel als Träger der titanhaltigen Feststoffkomponente verwendet, welches einen mittleren Teilchendurchmesser von 5 bis 200 µm, einen mittleren Teilchendurchmesser der Primärpartikel von 1 bis 10 µm und Hohlräume bzw. Kanäle mit einem mittleren Durchmesser von 1 bis 10 µm aufweist, deren makroskopischer Volumenanteil am Gesamtpartikel im Bereich von 5 bis 20 % liegt.

Außerdem betrifft die vorliegende Erfindung ein Verfahren zur Herstellung solcher Propylenpolymerisate sowie deren Verwendung als Folien, Fasern und Formkörper.

Katalysatorsysteme vom Typ der Ziegler-Natta-Katalysatoren sind u.a. aus der EP-B 014523, der EP-A 023425, der EP-A 045975 und der EP-A 195497 bekannt. Diese Systeme werden insbesondere zur Polymerisation von C₂-C₁₀-Alk-1-enen verwendet und enthalten u.a. Verbindungen des mehrwertigen Titans, Aluminiumhalogenide und/oder -alkyle, sowie Elektronendonorverbindungen, insbesondere Siliciumverbindungen, Ether, Carbonsäureester, Ketone und Lactone, die einerseits in Verbindung mit der Titankomponente und andererseits als Cokatalysator verwendet werden.

Die Herstellung der Ziegler-Natta Katalysatoren geschieht üblicherweise in zwei Schritten. Zuerst wird die titanhaltige Feststoffkomponente hergestellt. Anschließend wird diese mit dem Cokatalysator umgesetzt. Mit Hilfe der so erhaltenen Katalysatoren wird anschließend die Polymerisation durchgeführt.

Weiterhin werden in der US-A 48 57 613 und der US-A 52 88 824 Katalysatorsysteme vom Typ der Ziegler-Natta-Katalysatoren beschrieben, die neben einer titanhaltigen Feststoffkomponente und einer Aluminiumverbindung noch organische Silanverbindungen als externe Elektronendonorverbindungen aufweisen. Die dabei erhaltenen Katalysatorsysteme zeichnen sich u.a. durch eine gute Produktivität aus und liefern Polymerisate des Propylens mit einer hohen Stereospezifität, d.h. einer hohen Isotaktizität, einem geringen Chloranteil und einer guten Morphologie, d.h. einem geringen Anteil an Feinstkorn.

Für einige Anwendungsbereiche von Polymerisation des Propylens ist es erforderlich, daß diese sich u.a. durch eine hohe Steifigkeit und nur geringe Anteile an xylollöslichen Polymerisaten und an Chlor auszeichnen. Dies gilt beispielsweise für Behälter für Lebensmittel, die aus derartigen Polymerisaten des Propylens hergestellt werden. Die aus der US-A 48 57 613 und der US-A 52 88 824 bekannten Polymerisate des Propylens erfüllen diese Anforderungen nicht in ausreichendem Maße.

Der vorliegenden Erfindung lag daher die Aufgabe zugrunde, ausgehend von den aus der US-A 48 57 613 und der US-A 52 88 824 beschriebenen Polymerisaten des Propylens nochmals verbesserte Polymerisate des Propylens zu entwickeln, welche die obengenannten Nachteile nicht aufweisen.

Demgemäß wurden die eingangs definierten Propylenpolymerisate gefunden.

Die erfindungsgemäßen Propylenpolymerisate sind erhältlich durch Polymerisation in Gegenwart eines Ziegler-Natta-Katalysatorsystems aus einer titanhaltigen Feststoffkomponente a), die eine Verbindung des Magnesiums, ein Halogen, Kieselgel als Träger und einen Carbonsäureester als Elektronendonorverbindung aufweist, sowie als Cokatalysatoren über eine Aluminiumverbindung b) und eine weitere Elektronendonorverbindung c) verfügt.

Zur Herstellung der titanhaltigen Feststoffkomponente a) werden als Titanverbindungen im allgemeinen Halogenide oder Alkoholate des drei- oder vierwertigen Titans verwendet, wobei die Chloride des Titans, insbesondere Titantetrachlorid, bevorzugt sind. Die titanhaltige Feststoffkomponente enthält ferner Kieselgel als Träger.

Weiter werden bei der Herstellung der titanhaltigen Feststoffkomponente u.a. Verbindungen des Magnesiums eingesetzt. Als solche kommen insbesondere Magnesiumhalogenide, Magnesiumalkyle und Magnesiumaryle, sowie Magnesiumalkoxy- und Magnesiumaryloxyverbindungen in Betracht, wobei bevorzugt Magnesiumdichlorid, Magnesiumdibromid und Magnesiumdi-(C₁-C₁₀-alkyl)-Verbindungen verwendet werden. Daneben kann die titanhaltige Feststoffkomponente noch Halogen, bevorzugt Chlor oder Brom, enthalten.

Ferner enthält die titanhaltige Feststoffkomponente a) noch Elektronendonorverbindungen, beispielsweise mono- oder polyfunktionelle Carbonsäuren, Carbonsäureanhydride und Carbonsäureester, ferner Ketone, Ether, Alkohole, Lactone, sowie phosphor- und siliciumorganische Verbindungen. Bevorzugt werden als Elektronendonorverbindungen innerhalb der titanhaltigen Feststoffkomponente Phthalsäurederivate der allgemeinen Formel (II) 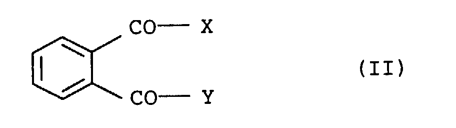 verwendet, wobei X und Y jeweils für ein Chloratom oder einen C₁- bis C₁₀-Alkoxyrest oder gemeinsam für Sauerstoff stehen. Besonders bevorzugte Elektronendonorverbindungen sind Phthalsäureester, wobei X und Y einen C₁-C₈-Alkoxyrest, beispielsweise einen Methoxy-, Ethoxy-, Propyloxy- oder einen Butyloxyrest bedeuten.

Weiter bevorzugte Elektronendonorverbindungen innerhalb der titanhaltigen Feststoffkomponente sind u.a. Diester von 3- oder 4-gliedrigen, gegebenenfalls substituierten Cycloalkyl-1,2-dicarbonsäuren, sowie Monoester von gegebenenfalls substituierten Benzophenon-2-carbonsäuren. Als Hydroxyverbindungen werden bei diesen Estern die bei Veresterungsreaktionen üblichen Alkohole verwendet, u.a. C₁-bis-C₁₅-Alkanole, C₅-bis-C₇-Cycloalkanole, die ihrerseits C₁-bis C₁₀-Alkylgruppen tragen können, ferner C₆-bis-C₁₀-Phenole.

Die titanhaltige Feststoffkomponente kann nach an sich bekannten Methoden hergestellt werden. Beispiele dafür sind u.a. in der EP-A 45 975, der EP-A 45 977, der EP-A 86 473, der EP-A 171 200, der GB-A 2 111 066, der US-A 48 57 613 und der US-A 52 88 824 beschrieben.

Bei der Herstellung der titanhaltigen Feststoffkomponente a) wird bevorzugt folgendes zweistufige Verfahren angewandt:

In der ersten Stufe versetzt man zunächst als feinteiligen Träger Kieselgel (SiO₂), welches in der Regel einen mittleren Teilchendurchmesser von 5 bis 200 µm, insbesondere von 20 bis 70 µm, ein Porenvolumen von 0,1 bis 10 cm³/g, insbesondere von 1,0 bis 4,0 cm³/g, und eine spezifische Oberfläche von 10 bis 1000 m²/g, insbesondere von 100 bis 500 m²/g, aufweist, mit einer Lösung der magnesiumhaltigen Verbindung in einem flüssigen Alkan, wonach man dieses Gemisch 0,5 bis 5 Stunden lang bei einer Temperatur zwischen 10 und 120°C rührt. Vorzugsweise setzt man pro Mol des Trägers 0,1 bis 1 mol der Magnesiumverbindung ein. Anschließend fügt man unter ständigem Rühren ein Halogen oder einen Halogenwasserstoff, insbesondere Chlor oder Chlorwasserstoff im wenigstens zweifachen, bevorzugt im wenigstens fünffachen molaren Überschuß, bezogen auf die magnesiumhaltige Verbindung, hinzu. Nach etwa 30 bis 120 Minuten fügt man diesem Reaktionsprodukt bei einer Temperatur zwischen 10 und 150°C ein C₁- bis C₈-Alkanol, insbesondere Ethanol, ein Halogenid oder ein Alkoholat des drei- oder vierwertigen Titans, insbesondere Titantetrachlorid, sowie eine Elektronendonorverbindung hinzu. Dabei setzt man pro Mol Magnesium des aus der ersten Stufe erhaltenen Feststoffs 1 bis 5 mol des drei- oder vierwertigen Titans und 0,01 bis 1 mol, insbesondere 0,2 bis 0,6 mol, der Elektronendonorverbindung ein. Dieses Gemisch wird wenigstens 30 Minuten lang bei einer Temperatur zwischen 10 und 150°C gerührt, der so erhaltene feste Stoff anschließend abfiltriert und mit einem C₇- bis C₁₀-Alkylbenzol, bevorzugt mit Ethylbenzol, gewaschen.

In der zweiten Stufe extrahiert man den aus der ersten Stufe erhaltenen Feststoff wenigstens eine Stunde lang bei Temperaturen zwischen 100 und 150°C mit überschüssigem Titantetrachlorid oder einer im Überschuß vorliegenden Lösung von Titantetrachlorid in einem inerten Lösungsmittel, vorzugsweise einem Alkylbenzol, wobei das Lösungsmittel wenigstens 5 Gew.-% Titantetrachlorid enthält. Danach wäscht man das Produkt solange mit einem flüssigen Alkan, bis der Gehalt der Waschflüssigkeit an Titantetrachlorid weniger als 2 Gew.-% beträgt.

Die auf diese Weise erhältliche titanhaltige Feststoffkomponente wird mit einem Cokatalysator als Ziegler-Natta-Katalysatorsystem verwendet. Als Cokatalysator kommt dabei u.a. eine Aluminiumverbindung b) in Frage.

Als Cokatalysatoren geeignete Aluminiumverbindungen b) sind neben Trialkylaluminium auch solche Verbindungen, bei denen eine Alkylgruppe durch eine Alkoxygruppe oder durch ein Halogenatom, beispielsweise durch Chlor oder Brom, ersetzt ist. Bevorzugt werden Trialkylaluminiumverbindungen verwendet, deren Alkylgruppen jeweils 1 bis 8 C-Atome aufweisen, beispielsweise Trimethyl-, Triethyl- oder Methyldiethylaluminium.

Bevorzugt verwendet man neben der Aluminiumverbindung b) noch als weiteren Cokatalysator Elektronendonorverbindungen c) wie beispielsweise mono- oder polyfunktionelle Carbonsäuren, Carbonsäureanhydride und Carbonsäureester, ferner Ketone, Ether, Alkohole, Lactone, sowie phosphor- und siliciumorganische Verbindungen. Bevorzugte Elektronendonorverbindungen sind dabei siliciumorganische Verbindungen der allgemeinen Formel (I)

R¹ ₙSi(OR²)₄₋ₙ (I)

wobei
R¹ gleich oder verschieden ist und eine C₁- bis C₂₀-Alkylgruppe, eine 5- bis 7-gliedrige Cycloalkylgruppe, die ihrerseits eine C₁- bis C₁₀-Alkylgruppe tragen kann, oder eine C₆- bis C₂₀-Aryl- oder Arylalkylgruppe bedeutet, R² gleich oder verschieden ist und eine C₁- bis C₂₀-Alkylgruppe bedeutet und n für die Zahlen 1, 2 oder 3 steht. Besonders bevorzugt werden dabei solche Verbindungen, in denen R¹ eine C₁- bis C₈-Alkylgruppe oder eine 5- bis 7-gliedrige Cycloalkylgruppe, sowie R² eine C₁- bis C₄-Alkylgruppe bedeutet und n für die Zahlen 1 oder 2 steht.

Unter diesen Verbindungen sind insbesondere Dimethoxydiisopropylsilan, Dimethoxyisobutylisopropylsilan, Dimethoxydiisobutylsilan, Dimethoxydicyclopentylsilan, Dimethoxyisobutylsec.butylsilan, Dimethoxyisopropylsec. butylsilan, Diethoxydicyclopentylsilan und Diethoxyisobutylisopropylsilan hervorzuheben.

Die einzelnen Verbindungen b) sowie gegebenenfalls c) können in beliebiger Reihenfolge einzeln oder als Gemisch zweier Komponenten als Cokatalysator verwendet werden.

Erfindungsgemäß wird in der titanhaltigen Feststoffkomponente a) ein solches feinteiliges Kieselgel verwendet, welches einen mittleren Teilchendurchmesser von 5 bis 200 µm, insbesondere von 20 bis 70 µm und einen mittleren Teilchendurchmesser der Primärpartikel von 1 bis 10 µm, insbesondere von 1 bis 5 µm aufweist. Bei den sogenannten Primärpartikeln handelt es sich dabei um poröse, granuläre Kieselgelpartikel, welche durch Mahlung, gegebenenfalls nach entsprechender Siebung, aus einem SiO₂-Hydrogel erhalten werden.

Weiterhin ist das erfindungsgemäß zu verwendende feinteilige Kieselgel u.a. auch noch dadurch charakterisiert, daß es Hohlräume bzw. Kanäle mit einem mittleren Durchmesser von 1 bis 10 µm, insbesondere von 1 bis 5 µm aufweist, deren makroskopischer Volumenanteil am Gesamtpartikel im Bereich von 5 bis 20 %, insbesondere im Bereich von 5 bis 15 % liegt. Das feinteilige Kieselgel weist ferner insbesondere ein Porenvolumen von 0,1 bis 10 cm³/g, bevorzugt von 1,0 bis 4,0 cm³/g und eine spezifische Oberfläche von 10 bis 1000 m²/g, bevorzugt von 100 bis 500 m²/g auf.

Aufgrund der in dem feinteiligen Kieselgel vorhandenen Hohlräume bzw. Kanäle liegt im Trägermaterial eine deutlich verbesserte Verteilung der Katalysatoraktivkomponenten vor. Darüber hinaus wirkt sich ein derart mit Hohlräumen und Kanälen durchzogenes Material positiv auf die diffusionskontrollierte Versorgung mit Monomeren und Cokatalysatoren und damit auch auf die Polymerisationskinetik aus. Ein solches feinteiliges Kieselgel ist u.a. erhältlich durch Sprühtrocknen von vermahlenem, entsprechend gesiebten SiO₂-Hydrogel, welches hierzu mit Wasser oder einem aliphatischen Alkohol vermaischt wird. Ein solches feinteiliges Kieselgel ist aber auch im Handel erhältlich.

Das Kieselgel liegt dabei innerhalb der titanhaltigen Feststoffkomponente a) bevorzugt in solchen Mengen vor, daß auf 1 Mol des Kieselgels 0,1 bis 1,0 Mol, insbesondere 0,2 bis 0,5 Mol der Verbindung des Magnesiums treffen.

Die als Cokatalysatoren wirkenden Verbindungen b) und gegebenenfalls c) kann man sowohl nacheinander als auch zusammen auf die titanhaltige Feststoffkomponente a) einwirken lassen. Üblicherweise geschieht dies bei Temperaturen von 0 bis 150°C, insbesondere von 20 bis 90°C und Drücken von 1 bis 100 bar, insbesondere von 1 bis 40 bar.

Bevorzugt werden die Cokatalysatoren b) sowie gegebenenfalls c) in einer solchen Menge eingesetzt, daß das Atomverhältnis zwischen Aluminium aus der Aluminiumverbindung und Titan aus der titanhaltigen Feststoffkomponente a) 10:1 bis 800:1, insbesondere 20:1 bis 200:1, und das Molverhältnis zwischen der Aluminiumverbindung und der als Cokatalysator eingesetzten Elektronendonorverbindung c) 1:1 bis 250:1, insbesondere 10:1 bis 80:1 beträgt.

Die Herstellung der erfindungsgemäßen Propylenpolymerisate kann in den üblichen, für die Polymerisation von C₂-C₁₀-Alk-1-enen verwendeten Reaktoren entweder absatzweise oder bevorzugt kontinuierlich u.a. als Suspensionspolymerisation oder bevorzugt als Gasphasenpolymerisation durchgeführt werden. Geeignete Reaktoren sind u.a. kontinuierlich betriebene Rührreaktoren, die ein Festbett aus feinteiligem Polymerisat enthalten, welches üblicherweise durch geeignete Rührvorrichtungen in Bewegung gehalten wird. Selbstverständlich kann die Reaktion auch in einer Reihe von mehreren, hintereinander geschalteten Reaktoren durchgeführt werden.

Die erfindungsgemäßen Propylenpolymerisate bestehen aus 25 bis 97 Gew.-% eines Propylenpolymerisats (I), das 0 bis 15 Gew.-% einpolymerisierte C₂-C₁₀-Alk-1-ene aufweist und aus 3 bis 75 Gew.-% eines weiteren Propylenpolymerisats (II) mit 15 bis 80 Gew.-% einpolymerisierte C₂-C₁₀-Alk-1-ene. Bevorzugt sind dabei solche Propylenpolymerisate, die aus 35 bis 95 Gew.-% eines Propylenpolymerisats (I) mit 0 bis 12 Gew.-% einpolymerisierter C₂-C₁₀-Alk-1-ene und aus 5 bis 65 Gew.-% eines Propylenpolymerisats (II) mit 20 bis 75 Gew.-% einpolymerisierter C₂-C₁₀-Alk-1-ene besteht. Besonders bevorzugte Propylenpolymerisate enthalten 40 bis 93 Gew.-% eines Propylenpolymerisats (I) mit 0 bis 9 Gew.-% einpolymerisierter C₂-C₁₀-Alk-1-ene und 7 bis 60 Gew.-% eines Propylenpolymerisats (II) mit 25 bis 70 Gew.-% einpolymerisierter C₂-C₁₀-Alk-1-ene. Vorzugsweise kann man auch ein solches Propylenpolymerisat verwenden, welches als propylenpolymerisat (I) ein Propylenhomopolymerisat aufweist.

Unter einpolymerisierten C₂-C₁₀-Alk-1-enen sind in diesem Zusammenhang insbesondere Ethylen, Propylen, But-1-en, Pent-1-en, Hex-1-en oder Oct-1-en oder Gemische aus diesen Comonomeren zu verstehen, wobei bevorzugt Ethylen oder But-1-en eingesetzt werden.

Das zu den erfindungsgemäßen Propylenpolymerisaten führende ebenfalls erfindungsgemäße Verfahren wird in der Weise durchgeführt, daß man zunächst in einer ersten Polymerisationsstufe das Propylenpolymerisat (I) und dann anschließend in einer zweiten Polymerisationsstufe das Propylenpolymerisat (II) herstellt.

Die Polymerisation des Propylens, sowie gegebenenfalls der entsprechenden C₂-C₁₀-Alk-1-ene wird in der ersten Polymerisationsstufe üblicherweise bei einem Druck von 15 bis 40 bar, einer Temperatur von 50 bis 100°C und einer mittleren Verweilzeit des Reaktionsgemisches von 0,5 bis 5 Stunden durchgeführt. Bevorzugt sind bei der Herstellung des Propylenpolymerisats (I) Drücke von 20 bis 35 bar, Temperaturen von 60 bis 90°C und mittlere Verweilzeiten von 0,5 bis 3 Stunden. Vorzugsweise wählt man dabei die Reaktionsbedingungen so, daß in dieser ersten Polymerisationsstufe pro mmol der Aluminiumkomponente 0,05 bis 2 kg des Propylenpolymerisats (I) gebildet werden. Als C₂-C₁₀-Alk-1-en wird dabei insbesondere Ethylen und But-1-en, oder ein Gemisch aus diesen Comonomeren verwendet, sofern es sich bei dem Propylenpolymerisat (I) um ein Copolymerisat handelt. In diesem Fall wird bei der Herstellung des Propylenpolymerisats (I) das Propylen mit den Comonomeren in der Weise copolymerisiert, daß das Verhältnis zwischen dem Partialdruck des Propylens und dem der Comonomeren auf 10:1 bis 1000:1, insbesondere auf 15:1 bis 500:1, eingestellt wird. Für den Fall, daß man als C₂-C₁₀-Alk-1-en Propylen verwendet, erhält man als Propylenpolymerisat (I) ein Propylenhomopolymerisat.

Das hierbei gebildete Propylenpolymerisat (I) wird nach Beendigung der Reaktion zusammen mit dem Katalysator aus der ersten Polymerisationsstufe ausgetragen und in die zweite Polymerisationsstufe eingeführt, wo das Propylenpolymerisat (II) hergestellt wird.

Dies erfolgt in der zweiten Polymerisationsstufe dadurch, daß in Anwesenheit des Propylenpolymerisats (I) Propylen zusammen mit einem oder mehreren C₂-C₁₀-Alk-1-enen bei Drücken von 15 bis 40 bar, Temperaturen von 30 bis 100°C und mittleren Verweilzeiten des Reaktionsgemisches von 0,5 bis 5 Stunden polymerisiert wird. Bevorzugt sind dabei Drücke von 10 bis 25 bar, Temperaturen von 40 bis 70°C und mittlere Verweilzeiten von 0,5 bis 3 Stunden. Üblicherweise liegen dabei die Drücke in der zweiten Polymerisationsstufe um wenigstens 7, vorzugsweise um wenigstens 10 bar unter denen in der ersten Polymerisationsstufe. Als C₂-C₁₀-Alk-1-ene werden dabei insbesondere Ethylen und But-1-en, oder ein Gemisch aus diesen Comonomeren eingesetzt. Zur Herstellung des Propylenpolymerisats (II) wird das Propylen mit den Comonomeren in der Weise copolymerisiert, daß das Verhältnis zwischen dem Partialdruck des Propylens und dem der Comonomeren auf 0,5:1 bis 20:1, insbesondere auf 0,5:1 bis 15:1, eingestellt wird. Durch geeignete Wahl der Polymerisationsparameter sollte außerdem darauf geachtet werden, daß das Gewichtsverhältnis zwischen den in der ersten und den in der zweiten Polymerisationsstufe umgesetzten Monomeren im Bereich von 0,5:1 bis 20:1, insbesondere im Bereich von 0,6:1 bis 10:1, liegt. In der zweiten Polymerisationsstufe kann man durch Zugabe geeigneter Mengen an C₁-C₈-Alkanolen, insbesondere von Isopropanol, die Aktivität des Katalysators und damit auch den Einbau der Comonomere in die Polymerkette regeln.

Die Molmasse der erfindungsgemäßen Propylenpolymerisate kann durch Zugabe von in der Polymerisationstechnik gebräuchlichen Reglern, beispielsweise von Wasserstoff, kontrolliert und über einen weiten Bereich eingestellt werden. Weiterhin ist es möglich, inerte Lösungsmittel wie beispielsweise Toluol oder Hexan, Inertgas wie Stickstoff oder Argon und kleinere Mengen Polypropylenpulver mitzuverwenden. Die erfindungsgemäßen Propylenpolymerisate weisen vorzugsweise Molmassen (Gewichtsmittel) zwischen 20 000 und 500 000 auf. Ihre Schmelzflußindizes, bei 230°C und unter einem Gewicht von 2,16 kg, nach DIN 53 735 liegen im Bereich von 0,1 bis 100 g/10 min, insbesondere im Bereich von 0,5 bis 50 g/10 min.

Die erfindungsgemäßen Propylenpolymerisate zeichnen sich gegenüber den bisher bekannten Propylenpolymerisaten insbesondere durch abgesenkte xylollösliche Anteile, d.h. eine verbesserte Stereospezifität und eine höhere Steifigkeit aus. Darüber hinaus weisen sie auch reduzierte Gehalte an Chlor auf. Die Produktivität des zur Herstellung dieser Propylenpolymerisate verwendeten Verfahrens ist gegenüber den bekannten Verfahren deutlich erhöht.

Aufgrund ihrer guten mechanischen Eigenschaften eignen sich die erfindungsgemäßen Propylenpolymerisate vor allem für die Herstellung von Folien, Fasern und Formkörpern.

### Beispiele 1 bis 6 und Vergleichsbeispiele A bis F

### Beispiel 1

### a) Herstellung der titanhaltigen Feststoffkomponente (1)

In einer ersten Stufe wurde feinteiliges Kieselgel (SiO₂₎, das einen Teilchendurchmesser von 20 bis 45 µm, ein Porenvolumen von 1,5 cm³/g und eine spezifische Oberfläche von 260 m²/g aufwies, mit einer Lösung von n-Butyloctylmagnesium in n-Heptan versetzt, wobei pro Mol SiO₂ 0,3 Mol der Magnesiumverbindung eingesetzt wurden. Das feinteilige Kieselgel war zusätzlich durch eine mittlere Teilchengröße der Primärpartikel von 3-5 µm und durch Hohlräume und Kanäle mit einem Durchmesser von 3-5 µm charakterisiert, wobei der makroskopische Volumenanteil der Hohlräume und Kanäle am Gesamtpartikel bei etwa 15 % lag. Die Lösung wurde 45 Minuten bei 95°C gerührt, danach auf 20°C abgekühlt, wonach die 10-fache molare Menge, bezogen auf die magnesiumorganische Verbindung, an Chlorwasserstoff eingeleitet wurde. Nach 60 Minuten wurde das Reaktionsprodukt unter ständigem Rühren mit 3 Mol Ethanol pro Mol Magnesium versetzt. Dieses Gemisch wurde 0,5 Stunden bei 80°C gerührt und anschließend mit 7,2 Mol Titantetrachlorid und 0,5 Mol Di-n-butylphthalat, jeweils bezogen auf 1 Mol Magnesium, versetzt. Anschließend wurde 1 Stunde bei 100°C gerührt, der so erhaltene feste Stoff abfiltriert und mehrmals mit Ethylbenzol gewaschen.

Das daraus erhaltene Festprodukt extrahierte man 3 Stunden lang bei 125°C mit einer 10 vol.-%igen Lösung von Titantetrachlorid in Ethylbenzol. Danach wurde das Festprodukt durch Filtration vom Extraktionsmittel getrennt und solange mit n-Heptan gewaschen, bis das Extraktionsmittel nur noch 0,3 Gew.-% Titantetrachlorid aufwies.

Die titanhaltige Feststoffkomponente enthielt
3,5 Gew.-% Ti
7,4 Gew.-% Mg
28,2 Gew.-% Cl.

Die Bestimmung des Teilchendurchmessers erfolgte durch Coulter-Counter-Analyse (Korngrößenverteilung der Kieselgelpartikel), die des Porenvolumens und der spezifischen Oberfläche durch Stickstoff-Adsorption nach DIN 66131 oder durch Quecksilber-Porosimetrie nach DIN 66133. Die Bestimmung der mittleren Teilchengröße der Primärpartikel, des Durchmessers der Hohlräume und Kanäle sowie deren makroskopischer Volumenanteil geschah mit der Hilfe der Scanning Electron Mikroscopy (Rasterelektronenmikroskopie) bzw. der Electron Probe Micro Analysis (Elektronenstrahl-Mikrobereichsanalyse) jeweils an Kornoberflächen und an Kornquerschnitten des Kieselgels.

### b) Polymerisation

Die Herstellung der Propylenpolymerisate wurde in einer Kaskade aus zwei hintereinander geschalteten vertikal gerührten Gasphasenreaktoren mit einem Nutzvolumen von jeweils 200 l in Anwesenheit von Wasserstoff als Molmassenregler durchgeführt.

Beide Reaktoren enthielten ein bewegtes Festbett aus feinteiligem Polymerisat.

In den ersten Gasphasenreaktor wurde gasförmiges Propylen eingeleitet und unter den in der Tabelle 1 aufgeführten Temperatur- und Druckbedingungen kontinuierlich polymerisiert. Dies erfolgte bei einer mittleren Verweilzeit von ca. 1,5 Stunden, wobei pro Stunde 1,7 g der titanhaltigen Feststoffkomponente a) 120 mMol Triethylaluminium und 10 mMol Dimethoxyisobutylisopropylsilan als Cokatalysator verwendet wurden.

Das nach Beendigung der Gasphasenpolymerisation erhaltene Propylenhomopolymerisat wurde anschließend zusammen mit noch aktiven Katalysatorbestandteilen in den zweiten Gasphasenreaktor übergeführt. Dort wurde diesem Propylenhomopolymerisat ein Gemisch aus Propylen und Ethylen unter den in der nachfolgenden Tabelle 1 angegebenen Bedingungen (Druck, Temperatur, Partialdruckverhältnis Propylen zu Ethylen, Gewichtsverhältnis umgesetzte Monomere der ersten Stufe zu umgesetzte Monomere der zweiten Stufe) und bei einer mittleren Verweilzeit von ca. 1,5 Stunden in Anwesenheit von Isopropanol als Regler kontinuierlich hinzu polymerisiert. Dabei wurde der gleiche Katalysator wie im ersten Reaktor eingesetzt.

### Vergleichsbeispiel A

Es wurde analog zum erfindungsgemäßen Beispiel 1 zunächst im ersten Reaktor ein Propylenhomopolymerisat hergestellt, dieses danach in den zweiten Reaktor übergeführt und dem Propylenhomopolymerisat dort ein Gemisch aus Propylen und Ethylen hinzupolymerisiert. Dies geschah unter analogen Reaktionsbedingungen wie im Beispiel 1 beschrieben, wobei aber eine solche titanhaltige Feststoffkomponente a) verwendet wurde, die ein granuläres Kieselgel mit folgenden Eigenschaften aufwies:

| | |
|---|---|
| Teilchendurchmesser | 20 bis 45 µm |
| Porenvolumen | 1,8 cm³/g |
| spezifische Oberfläche | 325 m²/g |
| Anteil der Hohlräume und Kanäle am Gesamtpartikel | < 1,0 % |

### Beispiele 2 bis 4

Das erfindungsgemäße Beispiel 1 wurde mit dem gleichen Katalysatorsystem wiederholt, wobei jetzt die Reaktionsbedingungen Druck, Temperatur, Partialdruckverhältnis Propylen zu Ethylen und Gewichtsverhältnis umgesetzte Monomere der ersten Stufe zu umgesetzte Monomere der zweiten Stufe entsprechend der Tabelle 1 variiert wurden.

### Vergleichsbeispiele B bis D

Es wurden jeweils die erfindungsgemäßen Beispiele 2 bis 4 analog wiederholt, wobei aber ein Katalysatorsystem mit einer solchen titanhaltigen Feststoffkomponente a) verwendet wurde, die ein granulares Kieselgel mit folgenden Eigenschaften aufwies:

| | |
|---|---|
| Teilchendurchmesser | 20 bis 45 µm |
| Porenvolumen | 1,8 cm³/g |
| spezifische Oberfläche | 325 m²/g |
| Anteil der Hohlräume und Kanäle am Gesamtpartikel | < 1,0 % |

Die jeweiligen Reaktionsbedingungen sind in der nachfolgenden Tabelle 1 aufgeführt.

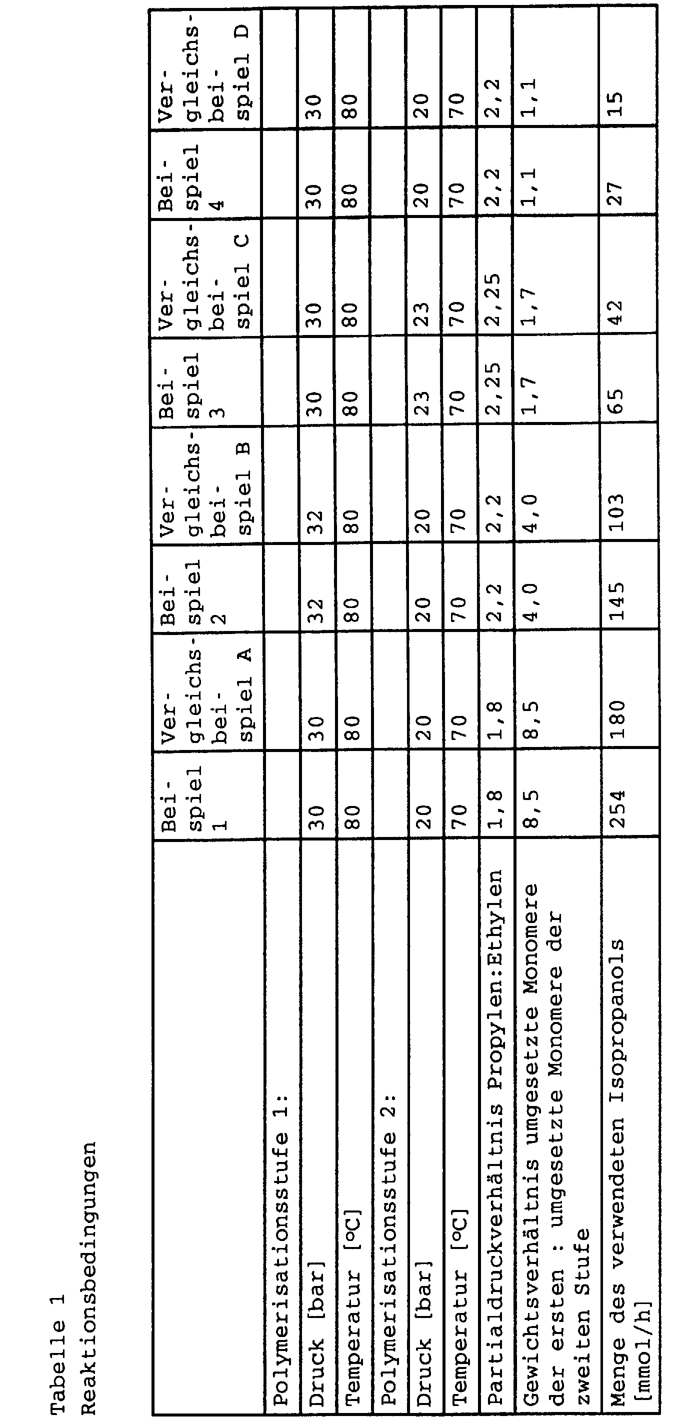

In der nachfolgenden Tabelle 2 sind für die erfindungsgemäßen Beispiele 1 bis 4 ebenso wie für die Vergleichsbeispiele A bis D jeweils die Produktivitäten in den beiden Polymerisationsstufen 1 und 2, sowie die folgenden Eigenschaften der erhaltenen Propylenpolymerisate aufgeführt: xylollösliche Anteile (Maß für die Stereospezifität), Schmelzflußindex, Steifigkeit (G-Modul), Schlagzähigkeit, Kerbschlagzähigkeit bei -20°C und bei -40°C und Chlorgehalte.

Daraus geht u.a. hervor, daß die erfindungsgemäßen Beispiele 1 bis 4 gegenüber den Vergleichsbeispielen A bis D eine deutlich erhöhte Produktivität aufweisen und zu Propylenpolymerisaten mit einer verbesserten Steifigkeit und abgesenkten xylollöslichen Anteilen sowie einem verringerten Chlorgehalt führen.

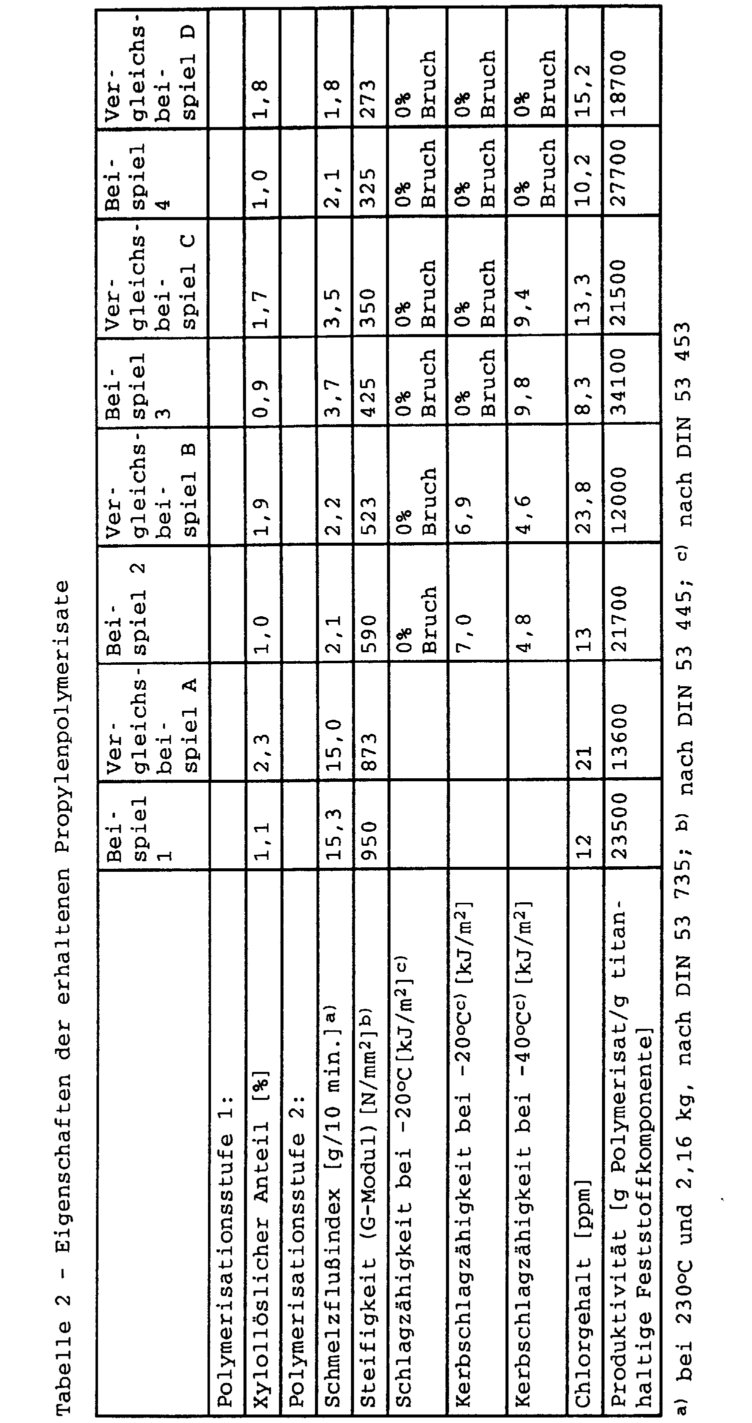

### Beispiele 5 und 6

Zur Herstellung der Propylenpolymerisate bestehend aus zwei Propylencopolymerisaten (I) und (II) wurde das gleiche Katalysatorsystem und die gleiche Reaktorkaskade wie im Beispiel 1 verwendet.

Dabei wurde zunächst in der ersten Polymerisationsstufe ein Gemisch aus Propylen und Ethylen bei einer mittleren Verweilzeit von 1,5 Stunden unter den in der Tabelle 3 angegebenen Bedingungen polymerisiert. Dem daraus erhaltenen Propylencopolymerisat (I) wurde anschließend in der zweiten Polymerisationsstufe ein Gemisch aus Propylen und Ethylen bei einer mittleren Verweilzeit von 1,5 Stunden in Anwesenheit von Isopropanol als Regler unter den in der Tabelle 3 angegebenen Bedingungen hinzupolymerisiert.

### Vergleichsbeispiele E und F

Es wurden die erfindungsgemäßen Beispiele 5 und 6 analog wiederholt, wobei aber ein Katalysatorsystem mit einer solchen titanhaltigen Feststoffkomponente a) verwendet wurde, die ein granuläres Kieselgel mit folgenden Eigenschaften aufwies:

| | |
|---|---|
| Teilchendurchmesser | 20 bis 45 µm |
| Porenvolumen | 1,8 cm³/g |
| spezifische Oberfläche | 325 m²/g |
| Anteil der Hohlräume und Kanäle am Gesamtpartikel | < 1,0 % |

Die jeweiligen Reaktionsbedingungen sind in der nachstehenden Tabelle 3 aufgeführt.

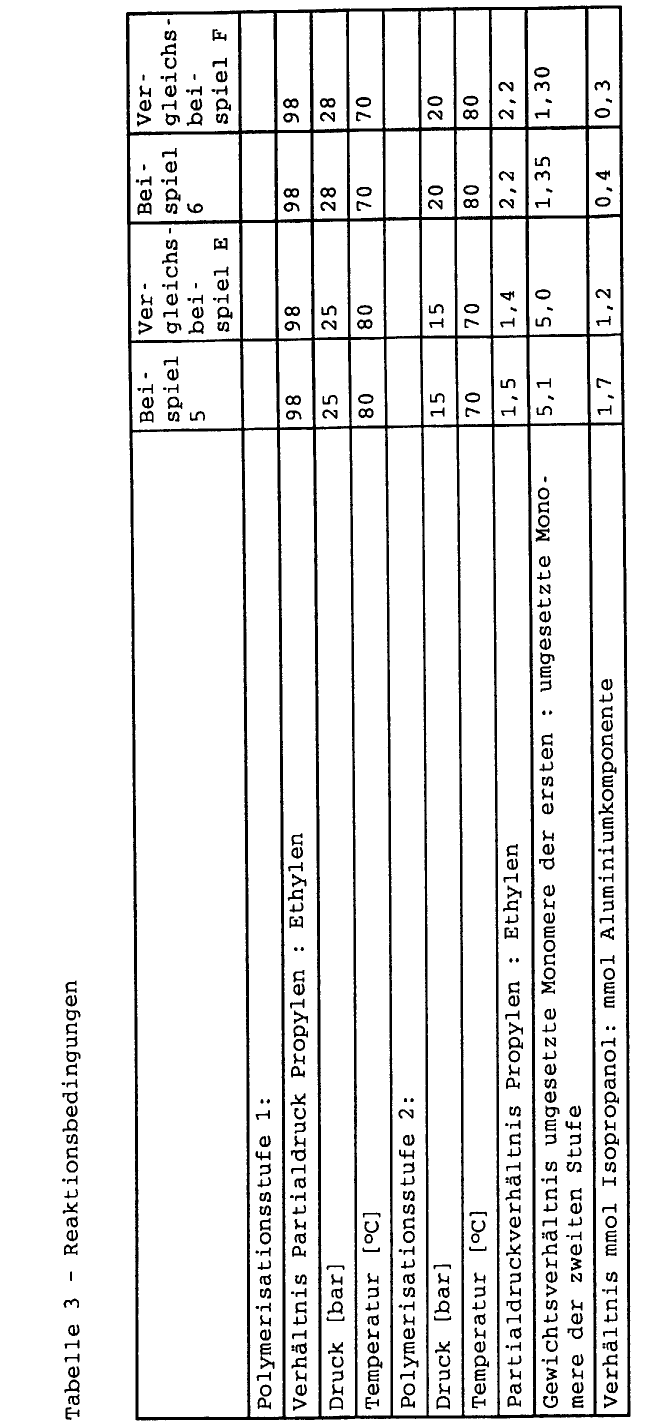

In der nachfolgenden Tabelle 4 sind für die erfindungsgemäßen Beispiele 5 und 6 ebenso wie für die Vergleichsbeispiele E und F jeweils die Schmelzflußindizes, die Gehalte an einpolymerisiertem Ethylen und die xylollöslichen Anteile am Propylencopolymerisat (I) oder (II) aufgeführt. Darüber hinaus enthält die Tabelle 4 noch folgende Angaben bezogen auf das Propylenpolymerisat: Produktivität, Steifigkeit (G-Modul), Schlagzähigkeit, Kerbschlagzähigkeit bei -20°C und bei -40°C und Chlorgehalte.

Daraus geht u.a. hervor, daß die erfindungsgemäßen Beispiele 5 und 6 gegenüber den Vergleichsbeispielen E und F eine deutlich erhöhte Produktivität aufweisen und zu Propylenpolymerisaten mit einer verbesserten Steifigkeit, abgesenkten xylollöslichen Anteilen und einem verringerten Chlorgehalt führen.

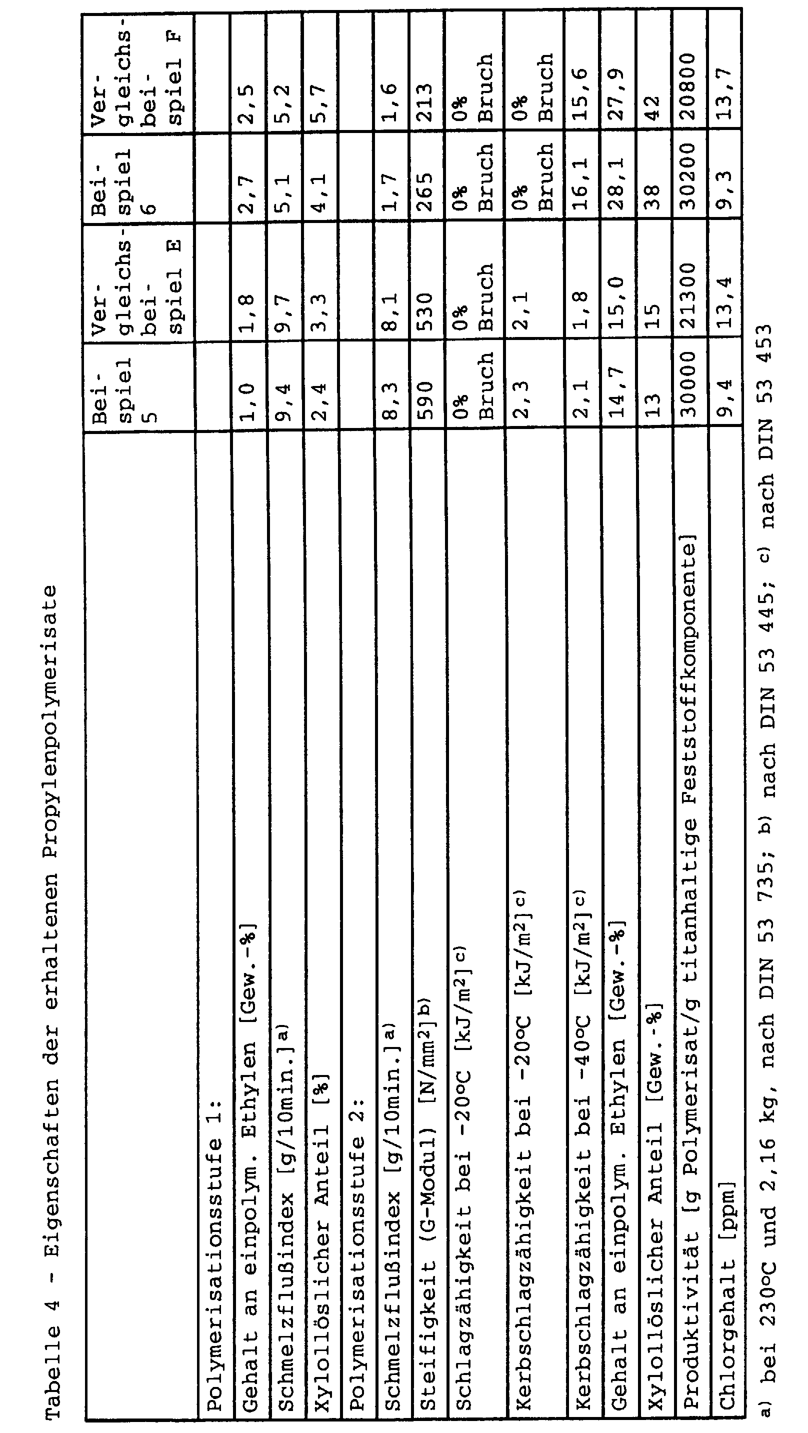

## Patentansprüche

1. Propylenpolymerisate mit einem Schmelzflußindex, gemessen nach DIN 53 735 bei 230°C unter einem Gewicht von 2,16 kg, im Bereich von 0,1 bis 100 g/10 min aus 25 bis 97 Gew.-% eines Propylenpolymerisats (I), das 0 bis 15 Gew.-% einpolymerisierte C₂-C₁₀-Alk-1-ene enthält und aus 3 bis 75 Gew.-% eines weiteren Propylenpolymerisats (II), das 15 bis 80 Gew.-% einpolymerisierte C₂-C₁₀-Alk-1-ene aufweist,
erhältlich durch zweistufige Polymerisation von Propylen und C₂-C₁₀-Alk-1-enen in Gegenwart eines Ziegler-Natta-Katalysatorsystems aus
a) einer titanhaltigen Feststoffkomponente, die eine Verbindung des Magnesiums, ein Halogen, Kieselgel als Träger und einen Carbonsäureester als Elektronendonorverbindung aufweist,
sowie als Cokatalysatoren
b) eine Aluminiumverbindung und
c) eine weitere Elektronendonorverbindung enthält,
wobei man in einer ersten Polymerisationsstufe bei Temperaturen im Bereich von 50 bis 100°C, Drücken im Bereich von 15 bis 40 bar und einer mittleren Verweilzeit von 0,5 bis 5 Stunden Propylen gegebenenfalls in Anwesenheit von weiteren C₂-C₁₀-Alk-1-enen polymerisiert
und anschließend in einer zweiten Polymerisationsstufe dem aus der ersten Polymerisationsstufe erhaltenen Propylenpolymerisat (I) bei Temperaturen im Bereich von 30 bis 100°C, Drücken im Bereich von 15 bis 40 bar und mittleren Verweilzeiten von 0,5 bis 5 Stunden ein Gemisch aus Propylen und weiteren C₂-C₁₀-Alk-1-enen so hinzupolymerisiert, daß das Gewichtsverhältnis zwischen den in der ersten und den in der zweiten Polymerisationsstufe umgesetzten Monomeren im Bereich von 0,5:1 bis 20:1 liegt,
dadurch gekennzeichnet, daß man in beiden Polymerisationsstufen ein Kieselgel als Träger der titanhaltigen Feststoffkomponente verwendet, welches einen mittleren Teilchendurchmesser von 5 bis 200 µm, einen mittleren Teilchendurchmesser der Primärpartikel von 1 bis 10 µm und Hohlräume bzw. Kanäle mit einem mittleren Durchmesser von 1 bis 10 µm aufweist, deren makroskopischer Volumenanteil am Gesamtpartikel im Bereich von 5 bis 20 % liegt.

2. Propylenpolymerisate nach Anspruch 1, wobei das verwendete Kieselgel Hohlräume und Kanäle mit einem durchschnittlichen Durchmesser von 1 bis 5 µm aufweist, deren makroskopischer Volumenanteil am Gesamtpartikel im Bereich von 5 bis 15 % liegt.

3. Propylenpolymerisate nach einem der Ansprüche 1 oder 2, wobei das verwendete Kieselgel ein Porenvolumen von 0,1 bis 10 cm³/g und eine spezifische Oberfläche von 10 bis 1000 m²/g aufweist.

4. Propylenpolymerisate nach den Ansprüchen 1 bis 3, wobei das verwendete Kieselgel sprühgetrocknet ist.

5. Propylenpolymerisate nach den Ansprüchen 1 bis 4, wobei als weitere Elektronendonorverbindung c) siliciumorganische Verbindungen der allgemeinen Formel (I)
R¹ ₙSi(OR²)₄₋ₙ (I)
verwendet werden, wobei R¹ gleich oder verschieden ist und eine C₁- bis C₂₀-Alkylgruppe, eine 5- bis 7-gliedrige Cycloalkylgruppe, die ihrerseits eine C₁- bis C₁₀-Alkylgruppe tragen kann, oder eine C₆- bis C₂₀-Aryl- oder Arylalkylgruppe, R² gleich oder verschieden ist und eine C₁- bis C₂₀-Alkylgruppe bedeutet und n für die Zahlen 1, 2 oder 3 steht.

6. Propylenpolymerisate nach den Ansprüchen 1 bis 5, wobei das Propylenpolymerisat (I) ein Propylenhomopolymerisat ist.

7. Propylenpolymerisate nach den Ansprüchen 1 bis 6, wobei als C₂-C₁₀-Alk-1-en Ethylen verwendet wird.

8. Verfahren zur Herstellung von Propylenpolymerisaten mit einem Schmelzflußindex, gemessen nach DIN 53 735 bei 230°C unter einem Gewicht von 2,16 kg, im Bereich von 0,1 bis 100 g/10 min. aus 25 bis 97 Gew.-% eines Propylenpolymerisats (I), das 0 bis 15 Gew.-% einpolymerisierte C₂-C₁₀-Alk-1-ene enthält und aus 3 bis 75 Gew.-% eines weiteren Propylenpolymerisats (II), das 15 bis 80 Gew.-% einpolymerisierte C₂-C₁₀-Alk-1-ene aufweist,
durch zweistufige Polymerisation von Propylen und C₂-C₁₀-Alk-1-enen in Gegenwart eines Ziegler-Natta-Katalysatorsystems aus
a) einer titanhaltigen Feststoffkomponente, die eine Verbindung des Magnesiums, ein Halogen, Kieselgel als Träger und einen Carbonsäureester als Elektronendonorverbindung aufweist,
sowie als Cokatalysatoren
b) eine Aluminiumverbindung und
c) eine weitere Elektronendonorverbindung enthält,
wobei man in einer ersten Polymerisationsstufe bei Temperaturen im Bereich von 50 bis 100°C, Drücken im Bereich von 15 bis 40 bar und einer mittleren Verweilzeit von 0,5 bis 5 Stunden Propylen gegebenenfalls in Anwesenheit von weiteren C₂-C₁₀-Alk-1-enen polymerisiert
und anschließend in einer zweiten Polymerisationsstufe dem aus der ersten Polymerisationsstufe erhaltenen Propylenpolymerisat (I) bei Temperaturen im Bereich von 30 bis 100°C, Drücken im Bereich von 15 bis 40 bar und mittleren Verweilzeiten von 0,5 bis 5 Stunden ein Gemisch aus Propylen und weiteren C₂-C₁₀-Alk-1-enen so hinzupolymerisiert, daß das Gewichtsverhältnis zwischen den in der ersten und den in der zweiten Polymerisationsstufe umgesetzten Monomeren im Bereich von 0,5:1 bis 20:1 liegt,
dadurch gekennzeichnet, daß man in beiden Polymerisationsstufen ein Kieselgel als Träger der titanhaltigen Feststoffkomponente verwendet, welches einen mittleren Teilchendurchmesser von 5 bis 200 µm, einen mittleren Teilchendurchmesser der Primärpartikel von 1 bis 10 µm und Hohlräume bzw. Kanäle mit einem mittleren Durchmesser von 1 bis 10 µm aufweist, deren makroskopischer Volumenanteil am Gesamtpartikel im Bereich von 5 bis 20 % liegt.

9. Verfahren nach Anspruch 8, dadurch gekennzeichnet, daß man die Polymerisation bei mittleren Verweilzeiten von 0,5 bis 3 Stunden durchführt.

10. Verwendung der Propylenpolymerisate gemäß den Ansprüchen 1 bis 7 als Folien, Fasern und Formkörper.

## Claims

1. A propylene polymer which has a melt flow index, measured in accordance with DIN 53 735 at 230°C under a load of 2.16 kg, in the range from 0.1 to 100 g/10 min and which comprises from 25 to 97% by weight of a propylene polymer (I) containing from 0 to 15% by weight of copolymerized C₂-C₁₀-alk-1-enes and also comprises from 3 to 75% by weight of a further propylene polymer (II) containing from 15 to 80% by weight of copolymerized C₂-C₁₀-alk-1-enes, obtainable by two-stage polymerization of propylene and C₂-C₁₀-alk-1-enes in the presence of a Ziegler-Natta catalyst system which comprises
a) a titanium-containing solid component comprising a compound of magnesium, a halogen, silica gel as support and a carboxylic ester as electron donor compound,
and also as cocatalysts
b) an aluminum compound and
c) a further electron donor compound,
where, in a first polymerization stage, propylene is polymerized in the presence or absence of further C₂-C₁₀-alk-1-enes at from 50 to 100°C, pressures in the range from 15 to 40 bar and a mean residence time of from 0.5 to 5 hours
and subsequently, in a second polymerization stage, a mixture of propylene and further C₂-C₁₀-alk-1-enes is polymerized at from 30 to 100°C, pressures in the range from 15 to 40 bar and mean residence times of from 0.5 to 5 hours onto the propylene polymer (I) obtained from the first polymerization stage in such a way that the weight ratio of the monomers reacted in the first polymerization stage to those reacted in the second polymerization stage is in the range from 0.5:1 to 20:1,
wherein, in both polymerization stages, the silica gel used as support for the titanium-containing solid component has a mean particle diameter of from 5 to 200 µm, a mean particle diameter of the primary particles of from 1 to 10 µm and voids or channels having a mean diameter of from 1 to 10 µm, which voids or channels have a macroscopic volume as a proportion of the total particle in the range from 5 to 20%.

2. A propylene polymer as claimed in claim 1, wherein the silica gel used has voids and channels having a mean diameter of from 1 to 5 µm, which voids and channels have a macroscopic volume as a proportion of the total particle in the range from 5 to 15%.

3. A propylene polymer as claimed in claim 1 or 2, wherein the silica gel used has a pore volume of from 0.1 to 10 cm³/g and a specific surface area of from 10 to 1000 m²/g.

4. A propylene polymer as claimed in any of claims 1 to 3, wherein the silica gel used has been spray dried.

5. A propylene polymer as claimed in any of claims 1 to 4, wherein the further electron donor compound c) is an organosilicon compound of the general formula (I)
R¹ ₙSi(OR²)₄₋ₙ (I),
where R¹ are identical or different and are each a C₁-C₂₀-alkyl group, a 5- to 7-membered cycloalkyl group which in turn can bear a C₁-C₁₀-alkyl group, or a C₆-C₂₀-aryl or arylalkyl group, R² are identical or different and are each a C₁-C₂₀-alkyl group and n is 1, 2 or 3.

6. A propylene polymer as claimed in any of claims 1 to 5, wherein the propylene polymer (I) is a propylene homopolymer.

7. A propylene polymer as claimed in any of claims 1 to 6, wherein the C₂-C₁₀-alk-1-ene used is ethylene.

8. A process for preparing a propylene polymer which has a melt flow index, measured in accordance with DIN 53 735 at 230°C under a load of 2.16 kg, in the range from 0.1 to 100 g/10 min and which comprises from 25 to 97% by weight of a propylene polymer (I) containing from 0 to 15% by weight of copolymerized C₂-C₁₀-alk-1-enes and also comprises from 3 to 75% by weight of a further propylene polymer (II) containing from 15 to 80% by weight of copolymerized C₂-C₁₀-alk-1-enes, by two-stage polymerization of propylene and C₂-C₁₀-alk-1-enes in the presence of a Ziegler-Natta catalyst system which comprises
a) a titanium-containing solid component comprising a compound of magnesium, a halogen, silica gel as support and a carboxylic ester as electron donor compound,
and also as cocatalysts
b) an aluminum compound and
c) a further electron donor compound,
where, in a first polymerization stage, propylene is polymerized in the presence or absence of further C₂-C₁₀-alk-1-enes at from 50 to 100°C, pressures in the range from 15 to 40 bar and a mean residence time of from 0.5 to 5 hours
and subsequently, in a second polymerization stage, a mixture of propylene and further C₂-C₁₀-alk-1-enes is polymerized at from 30 to 100°C, pressures in the range from 15 to 40 bar and mean residence times of from 0.5 to 5 hours onto the propylene polymer (I) obtained from the first polymerization stage in such a way that the weight ratio of the monomers reacted in the first polymerization stage to those reacted in the second polymerization stage is in the range from 0.5:1 to 20:1,
wherein, in both polymerization stages, the silica gel used as support for the titanium-containing solid component has a mean particle diameter of from 5 to 200 µm, a mean particle diameter of the primary particles of from 1 to 10 µm and voids or channels having a mean diameter of from 1 to 10 µm, which voids or channels have a macroscopic volume as a proportion of the total particle in the range from 5 to 20%.

9. A process as claimed in claim 8, wherein the polymerization is carried out at mean residence times of from 0.5 to 3 hours.

10. Use of the propylene polymers as claimed in any of claims 1 to 7 as films, fibers and moldings.

## Revendications

1. Polymères de propylène présentant un indice de fusion complète, mesuré selon la norme DIN 53 735 à 230°C sous un poids de 2,16 kg, de l'ordre de 0,1 à 100 g/10 minutes, à base de 25 à 97% en poids d'un polymère de propylène (I), qui contient 0 à 15% en poids d'alc-1-énes en C₂-C₁₀ copolymérisés, et à base de 3 à 75% en poids d'un autre polymère de propylène (II), qui présente 15 à 80% en poids d'alc-1-ènes en C₂-C₁₀ copolymérisés,
que l'on peut obtenir par une polymérisation en deux étapes de propylène et d'alc-1-ènes en C₂-C₁₀ en présence d'un système catalytique de Ziegler-Natta, à base
a) d'un composant de matière solide contenant du titane, qui présente un composé du magnésium, un halogène, du gel de silice comme support et un ester d'acide carboxylique comme composé donneur d'électrons,
ainsi que, comme cocatalyseurs,
b) d'un composé d'aluminium et
c) d'un autre composé donneurs d'électrons,
du propylène étant, dans une première étape de polymérisation, polymérisé éventuellement en présence d'autres alc-1-ènes en C₂-C₁₀ à des températures de l'ordre de 50 à 100°C, des pressions de l'ordre de 15 à 40 bars et une durée de séjour moyenne de 0,5 à 5 heures,
et ensuite, dans une deuxième étape de polymérisation, un mélange de propylène et d'autres alc-1-ènes en C₂-C₁₀ étant introduit pour polymériser dans le polymère de propylène (I) obtenu dans la première étape de polymérisation, à des températures de l'ordre de 30 à 100°C, des pressions de l'ordre de 15 à 40 bars et des durées de séjour moyennes de 0,5 à 5 heures, de façon que le rapport pondéral entre les monomères mis à réagir dans la première étape de polymérisation et ceux de la deuxième étape de polymérisation soit de l'ordre de 0,5/1 à 20/1,
caractérisés en ce que, dans les deux étapes de polymérisation, on utilise, comme support du composant de matière solide contenant du titane, un gel de silice qui présente un diamètre moyen des particules de 5 à 200 µm, un diamètre moyen des particules primaires de 1 à 10 µm et des cavités et respectivement canaux ayant un diamètre moyen de 1 à 10 µm, dont la fraction macroscopique en volume dans la particule globale est de l'ordre de 5 à 20%.

2. Polymères de propylène suivant la revendication 1, dans lesquels le gel de silice utilisé présente des cavités et canaux ayant un diamètre moyen de 1 à 5 µm, dont la fraction volumique macroscopique dans la particule globale est de l'ordre de 5 à 15%.

3. Polymères de propylène suivant l'une des revendications 1 et 2, dans lesquels le gel de silice utilisé présente un volume de pores de 0,1 à 10 cm³/g et une surface spécifique de 10 à 1000 m²/g.

4. Polymères de propylène suivant l'une des revendications 1 à 3, dans lesquels le gel de silice utilisé est séché par pulvérisation.

5. Polymères de propylène suivant l'une des revendications 1 à 4, dans lesquels on utilise, comme autre composé donneur d'électrons c), des composés organosiliciques de la formule générale (I):
R¹ ₙSi(OR²)₄₋ₙ (I)
dans laquelle R¹ est identique ou différent et représente un groupe alkyle en C₁ à C₂₀, un groupe cycloalkyle pentagonal à heptagonal, qui à son tour peut porter un groupe alkyle en C₁ à C₁₀, ou un groupe arylalkyle ou aryle en C₆ à C₂₀, R² est identique ou différent et représente un groupe alkyle en C₁ à C₂₀ et n représente les nombres 1, 2 ou 3.

6. Polymères de propylène suivant l'une des revendications 1 à 5, dans lesquels le polymère de propylène (I) est un homopolymère de propylène.

7. Polymères de propylène suivant l'une des revendications 1 à 6, dans lesquels on utilise de l'éthylène, comme alc-1-ène en C₂-C₁₀.

8. Procédé de préparation de polymères de propylène ayant un indice de fusion complète, mesuré selon la norme DIN 53 735 à 230°C sous un poids de 2,16 kg, de l'ordre de 0,1 à 100 g/10 minutes, à base de 25 à 97% en poids d'un polymère de propylène (I), qui contient 0 à 15% en poids d' alc-1-ènes en C₂-C₁₀ copolymérisés, et à base de 3 à 75% en poids d'un autre polymère de propylène (II), qui présente 15 à 80% en poids d' alc-1-ènes en C₂-C₁₀ copolymérisés,
par polymérisation en deux étapes de propylène et d'alc-1-ènes en C₂-C₁₀ en présence d'un système catalytique de Ziegler-Natta, à base
a) d'un composant de matière solide contenant du titane, qui présente un composé du magnésium, un halogène, un gel de silice comme support et un ester d'acide carboxylique comme composé donneur d'électrons,
ainsi que, comme cocatalyseurs,
b) d'un composé d'aluminium et
c) d'un autre composé donneurs d'électrons,
dans lequel, dans une première étape de polymérisation, on polymérise du propylène éventuellement en présence d'autres alc-1-ènes en C₂-C₁₀ à des températures de l'ordre de 50 à 100°C, des pressions de l'ordre de 15 à 40 bars et une durée de séjour moyenne de 0,5 à 5 heures,
et ensuite, dans une deuxième étape de polymérisation, un mélange de propylène et d'autres alc-1-ènes en C₂-C₁₀ est introduit pour polymérisation dans le polymère de propylène (I) obtenu dans la première étape de polymérisation, à des températures de l'ordre de 30 à 100°C, des pressions de l'ordre de 15 à 40 bars et des durées de séjour moyennes de 0,5 à 5 heures, de façon que le rapport pondéral entre les monomères mis à réagir dans la première étape de polymérisation et ceux de la deuxième étape de polymérisation soit de l'ordre de 0,5/1 à 20/1,
caractérisé en ce que, dans les deux étapes de polymérisation, on utilise, comme support du composant de matière solide contenant du titane, un gel de silice qui présente un diamètre moyen des particules de 5 à 200 µm, un diamètre moyen des particules primaires de 1 à 10 µm et des cavités ou respectivement canaux ayant un diamètre moyen de 1 à 10 µm, dont la fraction macroscopique en volume dans la particule globale est de l'ordre de 5 à 20%.

9. Procédé suivant la revendication 8, caractérisé en ce qu'on effectue la polymérisation avec des durées de séjour moyennes de 0,5 à 3 heures.

10. Utilisation des polymères de propylène suivant l'une des revendications 1 à 7, sous la forme de feuilles, de fibres ou de corps de moulage.
